# EUROPEAN PATENT APPLICATION

(11) **EP 4 579 997 A1**
(43) Date of publication of application: **02.07.2025**
(21) Application number: 24223088.6
(22) Date of filing: 23.12.2024
(51) Int. Cl.: H02J 9/00, G06F 1/3203, A47J 37/01, G06F 3/01

(54) **METHOD FOR POWERING A HOUSEHOLD APPLIANCE COMPRISING AT LEAST ONE ELECTRONIC DEVICE, AND FOR MANAGING STAND-BY STATES AND TRANSITIONS BETWEEN STAND-BY STATES AND OPERATING STATES OF THE HOUSEHOLD APPLIANCE**

(30) Priority: 28.12.2023 IT 202300028221
(71) Applicant: Candy S.p.A., 20861 Brugherio, Monza e Brianza (IT)
(72) Inventor: BIAMONTI, Giorgio, I-20861 Brugherio, MONZA E BRIANZA (IT); STRINATI, Alberto, I-20861 Brugherio, MONZA E BRIANZA (IT)
(74) Representative: Brunazzi, Stefano

(57) **Abstract**

There is described a method for powering a household appliance comprising at least one electronic device to be powered, and in particular for managing a stand-by state of the electronic device and transitions from a stand-by state to an operating state, and vice versa, of the household appliance.

The method first includes providing at least one electronic device main power source and further providing one electronic device auxiliary power source.

The electronic device main power source is adapted to feed, to the aforesaid electronic device, when activated and/or connected to the electronic device, a main current and/or voltage and/or power supply.

The electronic device auxiliary power source is operatively connected to the aforesaid at least one electronic device, to continuously feed an auxiliary current and/or voltage and/or power supply.

The value of such an auxiliary current and/or voltage and/or power supply is dimensioned to ensure a reduced and/or minimum set of functionalities of the electronic device, and the electronic device auxiliary power source is configured to transfer, to the electronic device, a lower power than the power transferred by the main power source.

The method then comprises the step of causing a transition from the operating state to the stand-by state of the household appliance (also implying a stand-by state of the at least one electronic device), following an automatic command of a control unit of the household appliance or a user command.

In case of such a transition from the operating state to the stand-by state, the main power source is switched off or disconnected from the at least one electronic device.

During the stand-by state, the electronic device is only powered by the auxiliary power source, so as to be in a low-consumption condition and simultaneously ready for a quick restart, allowed by the aforesaid reduced or minimum functionalities ensured by the auxiliary power supply.

The method finally comprises the step of causing a transition from the stand-by state to the operating state of the at least one electronic device, following a reactivation command by a user or an automatic command of a control unit of the household appliance.

In case of such a transition from the stand-by state to the operating state, the main power source is switched back on or reconnected to the at least one electronic device, quickly restarting the electronic device, already ready for the quick restart by virtue of the auxiliary power supply.

During the operating state, the at least one electronic device is powered by both the aforesaid electronic device main power source and the aforesaid electronic device auxiliary power source.

## Description

### TECHNOLOGICAL BACKGROUND OF THE INVENTION

### Field of application.

The present invention generally relates to the technical field of controlling a household appliance, and in particular to the technical context of methods for powering a household appliance comprising at least one electronic device and for managing stand-by states and transitions between stand-by states and operating states of the household appliance.

### Description of the prior art.

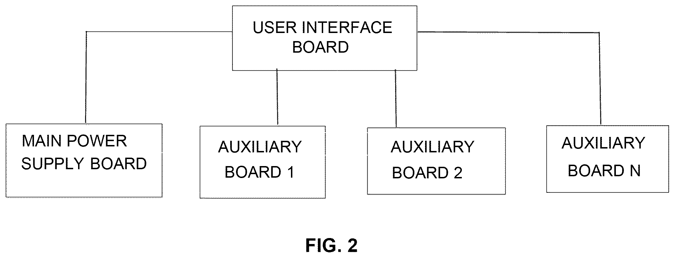

Nowadays, managing a household appliance by means of electronic boards generally follows a structure where there are a user interface for acquiring settings, a power board for managing the machine, and a series of auxiliary boards for specific tasks, which vary from one household appliance to the other (see the simplified diagram shown in figure 2, for example).

On the other hand, the regulations and laws which establish the consumption limits of the household appliances, and in particular the stand-by consumption limits, are becoming stricter and more stringent.

In the face of such constraints imposed by legislation, stand-by management strategies are known, including cutting off the power supply of the household appliance, of both the power supply and the electronic device power supply of the household appliance in stand-by conditions.

In particular, the known approach, adopted according to standard practice, is to act on the consumptions of the individual components to minimize the consumptions of each board so that the product, as a whole, meets the stand-by criteria requested by current legislation. This results in a waste of design time, necessity of selection of more sophisticated components, and greater system complexity.

The transition to the operating state involves reactivating the power supply that enables the switching back on of the components of the household appliance.

Such a transition exhibits no particular critical issues as for the switching back on of the electro-mechanical or electro-thermal components of the household appliance, the functionalities of which are in fact immediately reactivated after switching back on the power supply.

Instead, such a transition can exhibit critical issues in terms of time for re-starting (i.e., re-booting) the electronic components or electronic processing/control components of the household appliance, that, after switching back on their dedicated power supply, can require long re-boot / re-start times particularly disadvantageous for the user.

Such a drawback, and the need to address it, is increasingly felt in modern household appliances, which are becoming more "intelligent, "smarter" and "connected", and which thus comprise more and more important electronic interface and/or connection and/or processing and control components (such as screens, interactive user interfaces, wireless communication modules, modules for Internet-of-Things functionalities and so on, for example) and related control units provided with electronic processors.

For the reasons disclosed above, the aforementioned known solutions do not allow fully meeting the aforementioned needs.

In particular, as far as the Applicant is aware, solutions are not known, which allow complying with the strict laws that limit the stand-by consumptions while simultaneously allowing a quick re-boot (comparable with the immediate return to operating conditions of "traditional" household appliances) of all functionalities of the household appliance.

### SUMMARY OF THE INVENTION

It is the object of the present invention to provide a method for powering a household appliance comprising at least one electronic device, and for managing a stand-by state and transitions between stand-by states and operating states, which allows at least partially obviating the drawbacks complained of above with reference to the prior art, and meeting the aforesaid needs particularly felt in the technical field considered. Such an object is achieved by a method according to claim 1.

Further embodiments of such a method are defined by the dependent claims 2-12.

It is also an object of the present invention to provide a power supply control system for a household appliance comprising at least one electronic device to be powered, configured to control a stand-by state and transitions between stand-by states and operating states.

Such an object is achieved by a system according to claim 13 or claim 14.

Finally, the present invention also relates to a household appliance comprising the aforesaid control system and/or capable of performing or being controlled by the aforesaid method. Such a household appliance is defined in claim 15.

### BRIEF DESCRIPTION OF THE DRAWINGS

Further features and advantages of the methods and systems according to the invention will become apparent from the following description of preferred embodiments, given by way of non-limiting indication, with reference to the accompanying drawings, in which:
- figure 1 diagrammatically shows a control system, in particular for controlling a stand-by state and transitions between stand-by states and operating states of a household appliance, according to an embodiment of the present invention;
- figure 2 diagrammatically shows a simplified power supply diagram of a household appliance, according to the prior art.

### DETAILED DESCRIPTION

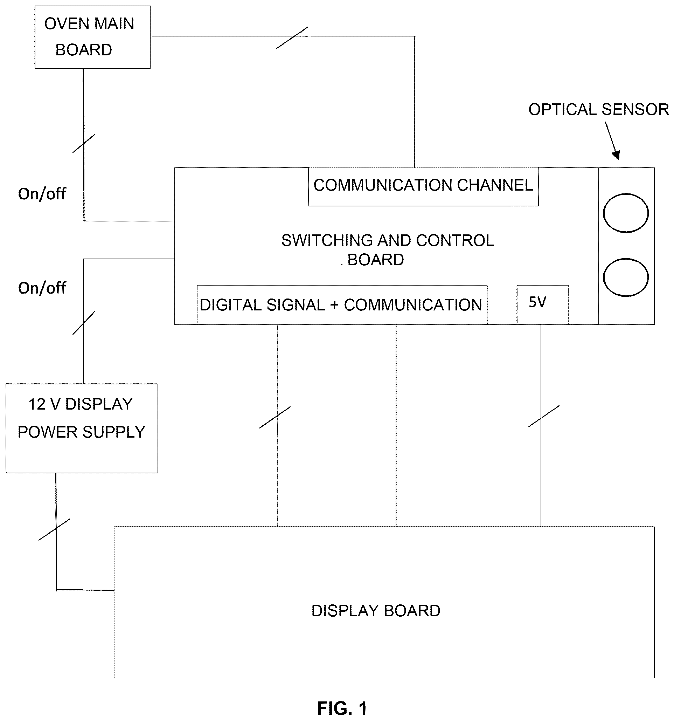

With reference to figure 1 there is described a method for powering a household appliance comprising at least one electronic device to be powered, and in particular for managing a stand-by state of the electronic device and transitions from a stand-by state to an operating state, and vice versa, of the household appliance.

The method first includes providing at least one electronic device main power source and further providing at least one electronic device auxiliary power source.

The at least one electronic device main power source is adapted to feed a respective main current and/or voltage and/or power supply to the aforesaid at least one electronic device, when activated and/or connected to the electronic device.

The at least one electronic device auxiliary power source is operatively connected to the aforesaid at least one electronic device, to continuously feed a respective auxiliary current and/or voltage and/or power supply.

The value of such an auxiliary current and/or voltage and/or power supply is dimensioned to ensure a reduced and/or minimum set of functionalities of the electronic device, and the at least one electronic device auxiliary power source is configured to transfer, to the electronic device, a lower power than the power transferred by the at least one main power source.

The method then comprises the step of causing a transition from an operating state to a stand-by state of the household appliance (which also causes a stand-by state of the at least one electronic device), following an automatic deactivation command by a control unit of the household appliance or following a user command.

In case of such a transition from the operating state to the stand-by state, the at least one main power source is switched off, or attenuated to supply a low power, or disconnected from the at least one electronic device.

During the stand-by state, the electronic device is powered by the auxiliary power source, so as to be in a low-consumption condition and simultaneously ready for a quick restart, allowed by the aforesaid reduced or minimum functionalities ensured by the auxiliary power supply.

The method finally comprises the step of causing a transition from the stand-by state to an operating state of the at least one electronic device, following an automatic reactivation command by a control unit of the household appliance or following a reactivation command by a user.

In case of such a transition from the stand-by state to the operating state, the at least one main power source is switched back on or reconnected to the at least one electronic device, quickly restarting the electronic device, already ready for the quick restart by virtue of the auxiliary power supply.

During the operating state, the at least one electronic device is powered by both the aforesaid at least one electronic device main power source and the aforesaid at least one electronic device auxiliary power source.

According to an embodiment of the method, the household appliance comprises a plurality of electronic devices. In this case, the steps of the above-described method are performed on each electronic device of the plurality of electronic devices.

According to an implementation option, the method uses only one main power source and only one auxiliary power source.

According to another implementation option, the method uses several main power sources and several auxiliary power sources.

According to an implementation option, during the stand-by state, the electronic device is only powered by the auxiliary power source.

According to an implementation option, in case of the transition from the operating state to the stand-by state, the main power source is switched off or disconnected from the at least one electronic device.

According to another implementation option, in case of the transition from the operating state to the stand-by state, the main power source is attenuated or lowered to supply a low power supply.

According to an embodiment of the method, the aforesaid at least one electronic device comprises electronic processing means and/or electronic microprocessors or processors, configured to control functional electronic components of the household appliance, such as screens and/or electronic display means, electronic user interface and/or interactive interface means, communication and/or interconnection modules (e.g., o the wireless type), loT (Internet-of-Things) functionality implementation modules.

According to an embodiment, the aforesaid at least one electronic device comprises both functional electronic components and electronic control components of the functional components.

According to possible implementation options, the aforesaid functional electronic components comprise, for example, screens and/or electronic display means and/or electronic user interface and/or interactive interface means and/or communication and/or interconnection modules, and/or loT functionality implementation modules.

According to possible implementation options, the electronic control components for controlling the functional components comprise, for example the aforesaid electronic processing means and/or electronic microprocessors or processors, for example included in electronic control boards.

According to an embodiment, the aforesaid electronic device comprises one or more low-consumption and slow restart (i.e., slow re-boot) electronic components, and one or more high-consumption and quick restart (i.e., quick re-boot) components.

In this case, the auxiliary power supply is fed to a subset of components comprising the aforesaid low-consumption and slow restart electronic components, so that during the stand-by state, the high-consumption and quick restart electronic components are deactivated, allowing a saving in energy, and the low-consumption and slow restart electronic components remain active, allowing a quick restart of the electronic device as a whole.

According to a particular implementation option, the aforesaid low-consumption and slow restart electronic components comprise an electronic control board provided with one or more electronic microprocessors or processors.

In this case, the auxiliary power supply is supplied to said processors or electronic microprocessors.

According to a particular embodiment, the electronic device comprises a screen or display, which is a high-consumption and quick restart component, and an electronic control board of the screen or display, which is a low-consumption and slow restart component.

According to different implementation examples, the method applies to a plurality of different household appliances, for example, such as an oven and/or a washing machine and/or a dishwasher and/or a fridge and so on.

According to a particular implementation example, the method applies to an oven, the electronic device of which is a screen or a display with a related electronic control board.

According to an embodiment of the method, the aforesaid at least one electronic device main power source and the aforesaid at least one electronic device auxiliary power source are additional and distinct from a further power supply source of the household appliance, adapted to power the electro-mechanical or electro-thermal components of the aforesaid household appliance.

According to an implementation option, the aforesaid electronic device main power source is configured to supply a voltage in a range of between 9V and 24V, and the aforesaid at least one electronic device auxiliary power source is configured to supply a voltage in a range of between 3V and 5V.

According to a particular implementation example, the main power source is configured to supply a voltage of 12V, and the auxiliary power source is configured to supply a voltage of 5V.

According to an embodiment of the method, the aforesaid steps of causing a transition from the operating state to the stand-by state of the household appliance and/or the electronic device and causing a transition from the operating state to the stand-by state of the household appliance and/or the electronic device are carried out by means of an electronic switching and control board, operatively connected, on one side, to a control unit of the household appliance and, on the other, to the at least one electronic device main power source and to the electronic device.

Such an electronic switching and control board is further configured to feed the aforesaid auxiliary power supply and cause the aforesaid main power source to switch, i.e., switch off or on, or connect or disconnect.

According to an embodiment of the method, the aforesaid automatic reactivation command is associated with a programmed start/switch-on procedure or is triggered by detecting the user's presence by means of a sensor.

According to an embodiment of the method, the aforesaid reactivation command by the user comprises a locally operated command or a remote-controlled command.

A system will now be described according to the present invention configured to perform the above method.

It is a power supply control system for a household appliance comprising at least one electronic device to be powered, and in particular a system for controlling a stand-by state of the electronic device and transitions from a stand-by state to an operating state, and vice versa, of the household appliance.

Such a system comprises a control unit of the household appliance, at least one electronic device main power source, that, when activated and/or connected to the electronic device, is adapted to feed a respective main current and/or voltage and/or power supply to said at least one electronic device, and a stand-by and power supply switching and control unit.

The stand-by and power supply switching and control unit comprises at least one electronic device auxiliary power source, operatively connected to the at least one electronic device, for continuously feeding a respective auxiliary current and/or voltage and/or power supply. The value of such an auxiliary current and/or voltage and/or power supply is dimensioned to ensure at least one reduced and/or minimum set of functionalities of the electronic device, and the at least one electronic device auxiliary power source is configured to transfer, to the electronic device, a lower power than the power transferred by the at least one main power source.

The stand-by and power supply switching and control unit is configured to perform the following actions:
- following a deactivation command received from the aforesaid control unit of the household appliance or following a user command, causing a transition from an operating state to a stand-by state of the household appliance, implying a stand-by state of the at least one electronic device; in case of such a transition from the operating state to the stand-by state, the stand-by and power supply switching and control unit is configured to switch off or disconnect, or attenuate, so as to supply a low power, the at least one main power source from the at least one electronic device, and during the stand-by state, to power the electronic device by the at least one auxiliary power source, so that the electronic device is in a low-consumption condition and simultaneously ready for a quick restart, allowed by said reduced or minimum functionalities ensured by the auxiliary power supply;
- following an automatic reactivation command by a control unit of the household appliance or following a reactivation command by a user, causing a transition from the stand-by state to the operating state of the at least one electronic device; in case of the aforesaid transition from a stand-by state to an operating state, the stand-by and power supply control and switching unit is configured to switch back on, or reconnect, or restore to a nominal value thereof, the at least one main power source to the at least one electronic device, quickly restarting the electronic device, already ready for the quick restart by virtue of the auxiliary power supply so that, during the operating state, the at least one electronic device is powered by both the at least one main power source and the at least one auxiliary power source.

According to different implementation options, the system is configured to perform a method according to any one of the previously described embodiments.

A household appliance according to the present invention will now be described.

The household appliance comprises at least one electronic device to be powered, and a system for controlling the power supply of the household appliance, configured, in particular, to control a stand-by state of the electronic device and transitions from a stand-by state to an operating state, and vice versa, of the household appliance. Such a system is in accordance with the system embodiments described above.

A preferred embodiment of the method according to the invention, characterized by further implementation details, illustrated for greater descriptive clarity, is shown below by way of non-limiting example.

The example relates to an oven provided with an electronic screen for displaying and interacting with the user (e.g., in touch mode).

For example, the screen is a large 19" screen, having a touch interface, managed by an Android operating system-based board and provided with a high-performance microprocessor for which it is impossible to ensure conformity with consumption demands in stand-by. In order to make it comply, it would be necessary to switch the product off almost completely, which would require a lengthy re-boot time.

In order to obviate this drawback, a control system has been conceived, which intervenes, in due time, keeping active only those minimum components which ensure exiting the stand-by state in instantaneous mode and for an unlimited period of time, i.e., not limited as could happen using the aid of a battery.

According to an implementation example, advanced user interfaces are used, typically VFD display.

In this case, if the known solutions were adopted, when the household appliance goes into a stand-by state, by means of a communication channel with the main power supply board and the various auxiliary power supply boards, the display board would switch off all loads and go into a "deep sleep mode": in fact, this would be the only way to comply with the stand-by consumption constraints imposed by the law. In order to quit such a stand-by state, after the user has interacted with the display board, the display board re-boots the operating system thereof in variably lengthy times, and reactivates the product.

Instead, in the present invention, the operating principle is the principle shown in figure 1.

When the product needs to go on stand-by, the display board notifies the switching and control board (or "switch board") to cut the main power supply (display power supply, e.g., of 12V) immediately or after a slight delay.

Meanwhile, the display board is put into a state of "deep sleep mode" or "low power mode".

After cutting off the main power supply from the display board, the switching and control board continues to keep it "alive" by a small current (provided by the source and connection of 5V indicated in figure 1).

When the system needs to be restarted, it can be done in different possible implementation options, through the following modes:
- the user interacts with the display board (for example he/she touches a key or presses a button, or touches a touch screen, or moves an optical sensor or sends a remote activation signal, etc.); when this happens, a digital pulse is sent to the switching and control board, or
- the user interacts directly with the switching and control board (e.g., he/she touches a key or presses a button, moves an optical sensor installed thereon, etc.).

In all cases, the switching and control board resumes supplying the main power supply again ("display power supply" 12V) to the display board; when the main power supply is detected again, the display board is reactivated with a fast re-boot.

As can be seen, the object of the present invention is fully achieved by the method and system disclosed above by virtue of the functional and structural features thereof.

In fact, the method and control system manage both the switching off of the non-essential sub-systems during the stand-by phase and the maintenance to a minimum functionality of those sub-systems necessary to ensure the quick reactivation of the household appliance, thus avoiding re-boot cycles having completion times incompatible with today's consumers' needs.

In brief, the solution suggested with the present invention allows complying with the strict laws limiting the stand-by consumptions while simultaneously ensuring a quick re-boot (comparable with the immediate return to operating conditions of "traditional" household appliances) of all functionalities of the household appliance.

Those skilled in the art may make changes and adaptations to the embodiments of the method and system described above or can replace elements with others which are functionally equivalent in order to meet contingent needs without departing from the scope of the following claims. Each of the features described as belonging to a possible embodiment can be implemented irrespective of the other embodiments described.

## Claims

1. A method for powering a household appliance comprising at least one electronic device to be powered, and in particular for managing a stand-by state of the electronic device and transitions from a stand-by state to an operating state, and vice versa, of the household appliance, wherein the method comprises:
- providing at least one electronic device main power source, that, when activated and/or connected to the electronic device, is adapted to feed a respective main current and/or voltage and/or power supply to said at least one electronic device;
- providing at least one electronic device auxiliary power source, operatively connected to said at least one electronic device, to continuously feed a respective auxiliary current and/or voltage and/or power supply,
wherein the value of said auxiliary current and/or voltage and/or power supply is dimensioned to ensure at least one reduced and/or minimum set of functionalities of the electronic device, and the at least one electronic device auxiliary power source is configured to transfer, to the electronic device, a lower power than the power transferred by the at least one main power source;
- following an automatic deactivation command by a control unit of the household appliance or a user command, causing a transition from an operating state to a stand-by state of the household appliance, said transition causing a stand-by state of the at least one electronic device, wherein, in case of said transition from the operating state to the stand-by state, the at least one main power source is switched off, or attenuated to supply a low power, or disconnected from the at least one electronic device, and wherein, during the stand-by state, the electronic device is powered by the at least one auxiliary power source, so as to be in a low-consumption condition and simultaneously ready for a quick restart, allowed by said reduced or minimum functionalities ensured by the auxiliary power supply;
- following an automatic reactivation command by a control unit of the household appliance or a reactivation command by a user, causing a transition from the stand-by state to the operating state of the at least one electronic device, wherein, in case of said transition from the stand-by state to the operating state, the at least one main power source is switched back on, or restored to a nominal value thereof, or reconnected to the at least one electronic device, quickly restarting the electronic device, already ready for the quick restart by virtue of the auxiliary power supply, and wherein, during the operating state, the at least one electronic device is powered by both said at least one electronic device main power source and said at least one electronic device auxiliary power source.

2. A method according to claim 1, wherein the household appliance comprises a plurality of electronic devices, and wherein the steps of the method are carried out on each electronic device of the plurality of electronic devices.

3. A method according to claim 1 or claim 2, wherein said at least one electronic device comprises:
- both functional electronic components, such as said screens and/or electronic display means and/or electronic user interface and/or interactive interface means and/or communication and/or interconnection modules, and/or loT functionality implementation modules,
- and electronic control components for controlling the functional components, such as said electronic processing means and/or electronic microprocessors or processors, for example included in electronic control boards, configured to control said functional electronic components of the household appliance.

4. A method according to claim 3, wherein said electronic device comprises one or more low-consumption and slow restart electronic components, and one or more high-consumption and quick restart components, and wherein the auxiliary power supply is fed to a subset of components comprising said low-consumption and slow restart electronic components, so that during the stand-by state, the high-consumption and quick restart electronic components are deactivated, allowing a saving in energy, and the low-consumption and slow restart electronic components remain active, allowing a quick restart of the electronic device as a whole.

5. A method according to claim 4, wherein said low consumption and slow restart electronic components comprise an electronic control board provided with one or more electronic microprocessors or processors, and wherein the auxiliary power supply is fed to said electronic microprocessors or processors.

6. A method according to any one of the preceding claims, wherein the electronic device comprises a screen or display, which is a high-consumption and quick restart component, and an electronic control board of the screen or display, which is a slow restart and low consumption component.

7. A method according to any one of the preceding claims, wherein the household appliance comprises an oven and/or a washing machine and/or a dishwasher and/or a fridge.

8. A method according to claims 6 and 7, wherein the household appliance is an oven, and the electronic device is a screen or display with a related electronic control board.

9. A method according to any one of the preceding claims, wherein said at least one electronic device main power source and at least one electronic device auxiliary power source are additional and distinct from a further household appliance power supply source, adapted to power the electro-mechanical or electro-thermal components of the household appliance.

10. A method according to any one of the preceding claims, wherein said electronic device main power source is configured to supply a voltage in a range of between 9V and 24V, and said at least one electronic device auxiliary power source is configured to supply a voltage in a range of between 3V and 5V.

11. A method according to any one of the preceding claims, wherein said steps of causing a transition from the operating state to the stand-by state of the household appliance and/or electronic device and causing a transition from the operating state to the stand-by state of the household appliance and/or electronic device are carried out by means of an electronic switching and control board, operatively connected, on one side, to a control unit of the household appliance and, on the other, to the at least one electronic device main power source and to the electronic device, and further configured to feed said auxiliary power supply and cause said at least one main power source to switch, i.e., switch off or on, or connect or disconnect.

12. A method according to any one of the preceding claims, wherein said automatic reactivation command is associated with a programmed start/switch-on procedure or is triggered by detecting the user's presence by means of a sensor,
and/or wherein said reactivation command by the user comprises a locally operated command or a remote-controlled command.

13. A power supply control system for a household appliance comprising at least one electronic device to be powered, configured to control a stand-by state of the electronic device and transitions from a stand-by state to an operating state, and vice versa, of the household appliance, wherein the system comprises:
- a control unit for controlling the household appliance;
- at least one electronic device main power source, that, when activated and/or connected to the electronic device, is adapted to feed a respective main current and/or voltage and/or power supply to said at least one electronic device;
- a stand-by and power supply switching and control unit, comprising at least one electronic device auxiliary power source, operatively connected to said at least one electronic device, for continuously feeding a respective auxiliary current and/or voltage and/or power supply, wherein the value of said auxiliary current and/or voltage and/or power supply is dimensioned to ensure at least one reduced and/or minimum set of functionalities of the electronic device, and the at least one electronic device auxiliary power source is configured to transfer, to the electronic device, a lower power than the power transferred by the at least one main power source;
wherein the stand-by and power supply switching and control unit is configured to perform the following actions:
- following a deactivation command received from said household appliance control unit or a user command, causing a transition from an operating state to a stand-by state of the household appliance, said transition causing a stand-by state of the at least one electronic device,
wherein, in case of said transition from the operating state to the stand-by state, the stand-by and power supply switching and control unit is configured to switch off or disconnect, or attenuate, so as to supply a low power, the at least one main power source from the at least one electronic device, and, during the stand-by state, to power the electronic device by means of the at least one auxiliary power source, so that the electronic device is in a low-consumption condition and simultaneously ready for a quick restart, allowed by said reduced or minimum functionalities, ensured by the auxiliary power supply;
- following an automatic reactivation command by a control unit of the household appliance or a reactivation command by a user, causing a transition from the stand-by state to the operating state of the at least one electronic device, wherein in case of said transition from the stand-by state to the operating state, the stand-by and power supply switching and control unit is configured to switch back on, or reconnect, or restore to a nominal value thereof, the at least one main power source to the at least one electronic device, quickly restarting the electronic device, already ready for the quick restart by virtue of the auxiliary power supply so that, during the operating state, the at least one electronic device is powered by both said at least one main power source and said at least one auxiliary power source.

14. A system according to claim 13, configured to implement a method according to any one of claims 1-12.

15. A household appliance comprising:
- at least one electronic device to be powered;
- a system for controlling the power supply of the household appliance, configured in particular to control a stand-by state of the electronic device and transitions from a stand-by state to an operating state, and vice versa, of the household appliance, wherein the system is in accordance with claim 13 or claim 14.
